(19) Europäisches Patentamt / European Patent Office / Office européen des brevets

(11) **EP 4 621 505 A1**

(12) **EUROPEAN PATENT APPLICATION**

(43) Date of publication:
24.09.2025 Bulletin 2025/39

(21) Application number: 25163455.6

(22) Date of filing: **13.03.2025**

(51) International Patent Classification (IPC):
**G05B 19/042** (2006.01)    **G05B 9/03** (2006.01)

(52) Cooperative Patent Classification (CPC):
**G05B 19/0428; G05B 9/03;** G05B 2219/25428

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2024 JP 2024046573**

(71) Applicant: **Yokogawa Electric Corporation
Tokyo 180-8750 (JP)**

(72) Inventor: **NISHIDA, Shunsuke
Musashino-shi, Tokyo, 180-8750, (JP)**

(74) Representative: **Winter, Brandl - Partnerschaft
mbB
Alois-Steinecker-Straße 22
85354 Freising (DE)**

(54) **FIELD DEVICE AND DIAGNOSIS METHOD**

(57)    In a field device (10), a sensor (101) measures a given physical quantity and outputs a sensor measurement value that is a value representing the measured physical quantity, a first CPU (102) performs a given arithmetic operation and given fixed-cycle processing on the sensor measurement value and voluntarily transmits sequence information containing a result of executing the fixed-cycle processing, and a second CPU (103) determines whether the first CPU (102) has a failure by determining whether the fixed-cycle processing is executed normally based on the sequence information.

EP 4 621 505 A1

## Description

FIELD

The present disclosure relates to a field device and a diagnosis method.

BACKGROUND

Some field devices, such as pressure gauges and flowmeters, have a function of diagnosing a failure in a central processing unit (CPU) that the field device mounts.

Example of related-art is described in Japanese Laid-open Patent Publication No. H08-234828

A time necessary for a failure diagnosis on a CPU is preferably short.

SUMMARY

According to an aspect of an embodiment, a field device includes a sensor, a first CPU and a second CPU. The sensor measures a given physical quantity and that outputs a sensor measurement value that is a value representing the measured physical quantity. The first CPU performs a given arithmetic operation and given fixed-cycle processing on the sensor measurement value and voluntarily transmits sequence information containing a result of executing the fixed-cycle processing. And the second CPU determines whether the first CPU has a failure by determining whether the fixed-cycle processing is executed normally based on the sequence information.

BRIEF DESCRIPTION OF THE DRAWINGS

FIG. 1 is a diagram illustrating an example of a configuration of a diagnosis system according to a first embodiment of the present disclosure;
FIG. 2 is a diagram illustrating an example of sequence information according to the first embodiment of the disclosure;
FIG. 3 is a diagram illustrating an example of operations performed by a first CPU according to the first embodiment of the disclosure;
FIG. 4 is a diagram illustrating an example of operations performed by the first CPU according to the first embodiment of the disclosure;
FIG. 5 is a diagram illustrating an example of operations performed by the first CPU according to the first embodiment of the disclosure;
FIG. 6 is a diagram illustrating an example of operations performed by the first CPU according to the first embodiment of the disclosure; and
FIG. 7 is a diagram illustrating an example of operations performed by a second CPU according to the first embodiment of the disclosure.

DESCRIPTION OF EMBODIMENTS

Embodiments of the present disclosure will be described below according to the accompanying drawings.
Note that, in the following embodiments, the same parts or the same processes are denoted with the same reference numerals and thus redundant description thereof will be sometimes omitted.

First Embodiment

Configuration of Diagnosis system

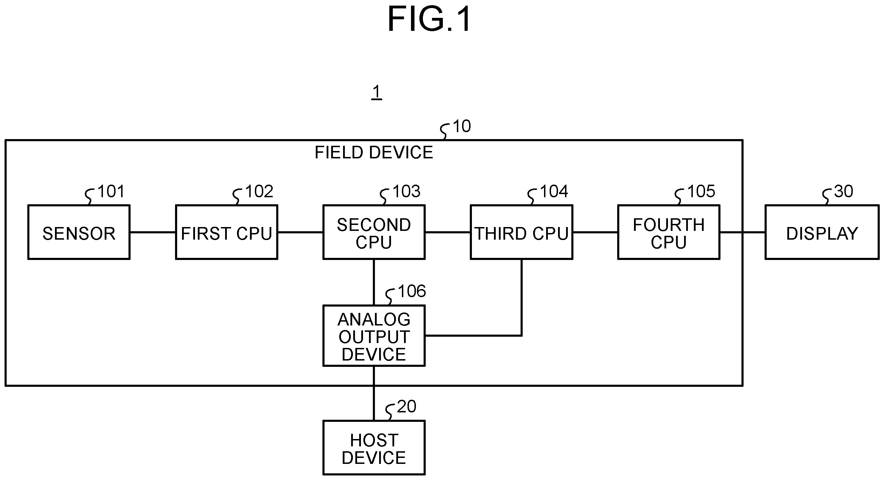

FIG. 1 is a diagram illustrating an example of a configuration of a diagnosis system according to a first embodiment of the present disclosure. According to FIG. 1, a diagnosis system 1 includes a field device 10, a host device 20, and a display 30. A pressure gauge, a flowmeter, a thermometer, and a level meter are taken as examples of the filed device 10. A personal computer is taken as an example of the host device 20. A liquid crystal display (LCD) is taken as an example of the display 30.

Configuration of Field Device

According to FIG. 1, the field device 10 includes a sensor 101, a first CPU 102, a second CPU 103, a third CPU 104, a fourth CPU 105, and an analog output device 106. Note that the field device 10 may include the display 30.
The sensor 101 measures a given physical quantity and transmits a value representing the measured physical quantity (sometimes referred to as "sensor measurement value" below) to the first CPU 102.
The first CPU 102 performs calibration, such as a temperature correction, and a given arithmetic operation on the sensor measurement value and transmits the measurement value after the calibration and the given arithmetic operation (sometimes referred to as "post-arithmetic-operation measurement value" below) to the second CPU 103. The first CPU 102 performs given fixed-cycle processing and performs a self-diagnosis on the first CPU 102 and transmits sequence information containing the result of executing the given fixed-cycle processing and the result of executing the self-diagnosis to the second CPU 103. The first CPU 102 voluntarily transmits the sequence information to the second CPU 103 at given timing without receiving a request for acquisition of the sequence information from the second CPU 103.
The second CPU 103 transmits the digital post-arithmetic-operation measurement value to the third CPU 104. The second CPU 103 also converts the digital post-arithmetic-operation measurement value into an analog current value and sets the converted current value (sometimes referred to as "analog measurement value" below) in the analog output device 106. The second CPU 103 does not transmit the request for acquisition of the sequence information to the first CPU 102.

The second CPU 103 checks the sequence information that is transmitted from the first CPU 102, thereby performing a failure diagnosis on the first CPU 102. The second CPU 103 makes a determination on whether the fixed-cycle processing by the first CPU 102 is executed normally (sometimes referred to as "fixed-cycle processing determination" below) and makes a determination on whether the self-diagnosis by the first CPU 102 is executed normally (sometimes referred to as "self-diagnosis determination" below), thereby diagnosing whether the first CPU 102 has a failure. When an abnormality is detected in both or any one of the fixed-cycle processing determination and the self-diagnosis determination, the second CPU 103 determines that the first CPU 102 has a failure. When it is determined that the first CPU 102 has a failure, the second CPU 103 sets the analog current value at a current value that is output at a burnout (sometimes referred to as "burnout value" below) and sets the current value that is set at the burnout value in the analog output device 106.

While the third CPU 104 transmits the post-arithmetic-operation measurement value to the fourth CPU 105, the third CPU 104 performs field communication with the host device 20 via the analog output device 106.

The fourth CPU 105 causes the display 30 to display the post-arithmetic-operation measurement value.

The analog output device 106 outputs the analog current value that is set by the second CPU 103 to the host device 20.

The host device 20 supplies power to the field device 10 and performs field communication with the third CPU 104 via the analog output device 106. When the current value that is set by the second CPU 103 is the burnout value, the host device 20 determines that an abnormality occurs in both or any one of the fixed-cycle processing determination and the self-diagnosis determination and performs abnormality processing. The host device 20, for example, stops the power supply to the field device 10 as the abnormality processing, thereby stopping the operation of the field device 10.

Sequence Information

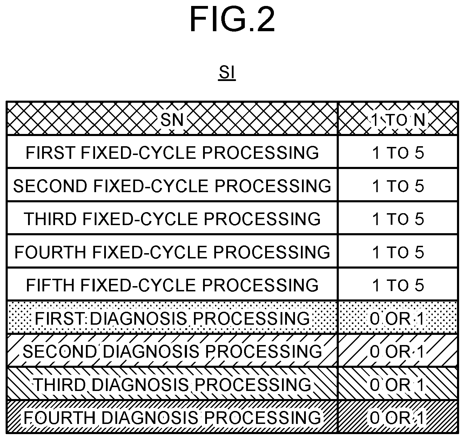

FIG. 2 is a diagram illustrating an example of the sequence information according to the first embodiment of the disclosure. Sequence information SI in FIG. 2 has sequence numbers SNs, processing numbers 1 to p of the fixed-cycle processing in the first CPU 102 ad diagnosis bits 1 to q of the self-diagnosis performed by the first CPU 102.

FIG. 2 illustrates the case where five types of first to fifth fixed-cycle processing are performed in the first CPU 102 (that is, the case where "p" is "5") as an example. For example, measurement completion interruption processing that is interruption processing for receiving a notification indicating that measurement by the sensor 101 has completed (sometimes referred to as "measurement completion notification" below) from the sensor 101, a sensor measurement value read processing that is processing of reading the sensor measurement value from the sensor 101, calibration processing on the sensor measurement value, given arithmetic operation processing on the sensor measurement value, and transmission processing that is processing of transmitting the post-arithmetic-operation measurement value and the sequence information to the second CPU 103 are taken as the five types of fixed-cycle processing.

FIG. 2 illustrates the case where the first CPU 102 performs the four types of first to fourth self-diagnosis processing are performed in the first CPU 102 (that is, the case where "q" is "4") as an example. For example, error detection code (EDC) read diagnosis processing, random access memory (RAM) march diagnosis processing, CPU instruction test processing, and micro processor unit (MPU) diagnosis processing are taken as the four types of self-diagnosis processing. In the EDC read diagnosis processing, it is checked that no RAM rewriting has occurred by reading the whole area of the RAM in which EDC is enabled. In the RAM march diagnosis processing, it is checked that no stuck bit in the RAM has occurred by carrying out a march test on the whole area of the RAM. In the CPU instruction test processing, it is checked that the processing system of the first CPU 102 has no failure by executing all instructions of the first CPU 102 as a test. In the MPU diagnosis processing, it is checked that the MPU is operating normally by executing memory protection by the MPU is executed as a test.

The sequence number SN contained in the sequence information SI serves as an identifier representing an order of transmission of each set of sequence information SI and is a number for the second CPU 103 to check that the sequence information SI is transmitted from the first CPU 102 to the second CPU 103 in order. For example, the first CPU 102 increments the sequence number SN by "1" each time the first CPU 102 generates sequence information SI and the second CPU 103 checks that the sequence number SN is incremented by "1" each time the second CPU 103 receives the sequence information SI from the first CPU 102. When the sequence number SN is not incremented by "1", the second CPU 103 diagnoses that the first CPU 102 has a failure.

The magnitude of the increment of the sequence number SN is not limited to "1" and it may be "2" or more. Furthermore, an identifier other than the sequence number SN may be usable as the identifier representing the order of transmission of each set of sequence information SI. For example, the first CPU 102 may change the identifier using a given pattern each time the first CPU 102 generates sequence information and the second CPU 103 may diagnose that the first CPU 102 has a failure when the pattern of change of the identifier contained in the received sequence information does not match the given pattern.

The processing numbers 1 to p of the fixed-cycle processing are data for the second CPU 103 to check that the first to p-th sets of fixed-cycle processing that are p types of fixed-cycle processing are executed in order in the first CPU 102. Unique processing numbers 1 to p are assigned previously to the respective first to p-th sets of fixed-cycle processing. Each time the first CPU 102 executes each of the sets of fixed-cycle processing, the first CPU 102 records the processing number unique to the fixed-cycle processing in the sequence information SI in order. The second CPU 103 checks that all the processing numbers are recorded once in order (that is, in the following order: 1, 2, 3, ..., p) in the sequence information SI. The order of arrangement of the processing numbers in the case where execution of the fixed-cycle processing is normal is 1, 2, 3, ..., p. On the other hand, when execution of the fixed-cycle processing is abnormal, for example, when the last fixed-cycle processing is not executed, the order of arrangement of the processing numbers is 1, 2, 3, ..., p-1. For example, when the turns of the second fixed-cycle processing and the third fixed-cycle processing are switched and the third fixed-cycle processing is executed prior to the second fixed-cycle processing as the case where execution of the fixed-cycle processing is abnormal, the order of arrangement of the processing numbers is 1, 3, 2, ..., p. For example, when the second fixed-cycle processing is executed twice as the case where execution of the fixed-cycle processing is abnormal, the order of arrangement of the processing numbers is 1, 2, 2, ..., p-1. The second CPU 103 diagnoses that the first CPU 102 has a failure when execution of the fixed-cycle processing is abnormal.

The diagnosis bits 1 to q of self-diagnosis are bits for the second CPU 103 to check that each of the first to q-th sets of diagnosis processing that are q types of self-diagnosis processing has been started at least once and completed within a certain time T3 in the first CPU 102. The first to q-th sets of self-diagnosis processing and the diagnosis bits 1 to q correspond on a one-to-one basis. While the first CPU 102 sets the diagnosis bit at 0 at the time when the first CPU 102 starts each of the first to q-th sets of self-diagnosis processing, the first CPU 102 sets the diagnosis bit at 1 at the time when the first CPU 102 completes each of the first to q-th sets of self-diagnosis processing. The second CPU 103 stores the diagnosis bits 1 to q contained in the sequence information using storage variables V1 by OR and using storage variables V2 by AND. The initial value of the storage variable V1 is 0 and the initial value of the storage variable V2 is 1. After the elapse of the certain time T3, the second CPU 103 checks that all the bits of the storage variables V1 are 1 and all the bits of the storage variables V2 are 0. The second CPU 103 diagnoses that the first CPU 102 has a failure when the storage variables V1 include a bit of 0 and when the storage variables V2 include a bit of 1.

In order to prevent wrongly diagnosing that the first CPU 102 has a failure when the sequence information SI is lost due to an electric noise, or the like, the first CPU 102 may latch the state of the diagnosis bit such that the state where the diagnosis bit is 0 is maintained over a plurality of periods.

As described above, the second CPU 103 monitors the sequence of operations of the first CPU 102 based on the sequence information SI.

Operations of First CPU

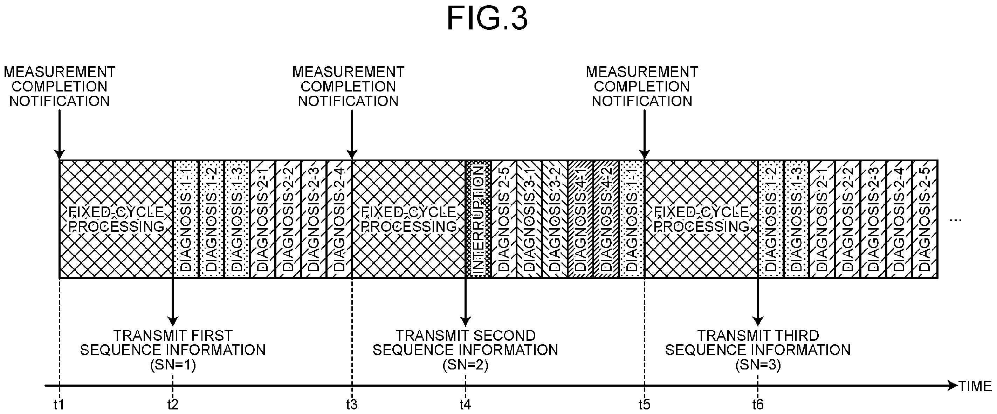

FIGS. 3, 4, 5 and 6 are diagrams illustrating examples of operations performed by the first CPU according to the first embodiment of the disclosure. FIG. 3 illustrates, as an example, the case where the first diagnosis processing is divided into three diagnoses 1-1 to 1-3 and is executed, second diagnosis processing is divided into five diagnoses 2-1 to 2-5 and is executed, third diagnosis processing is divided into two diagnoses 3-1 and 3-2 and is executed, and fourth diagnosis processing is divided into two diagnoses 4-1 and 4-2 and is executed. Each of the sets of fixed-cycle processing illustrated in FIG. 3 contains five types of sets of fixed-cycle processing that are the first to fifth sets of fixed-cycle processing. In FIG. 3, the interval between times t1 and t2, the interval between times t3 and t4, and the interval between times t5 and t6 are equal to one another. The interval between times t2 and t3 and the interval between times t4 and t5 are equal to each other.

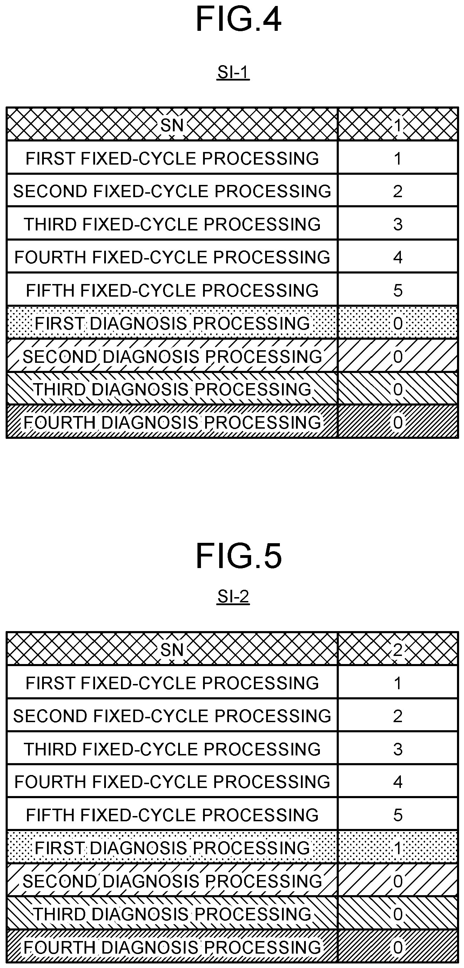

The first CPU 102 starts the first fixed-cycle processing at a time t1 when a notification of completion of the first measurement is received from the sensor 101. The first CPU 102 transmits the first sequence information SI-1 illustrated in FIG. 4 to the second CPU 103 at a time t2 when the first CPU 102 completes the first fixed-cycle processing and does not store the first sequence information SI-1. The first CPU 102 voluntarily transmits the first sequence information SI-1 to the second CPU 103 without receiving a request to acquire sequence information from the second CPU 103. At the t2, none of the first to fourth diagnosis processing is started and thus all the diagnosis bits in the first sequence information SI-1 are set at 0.

Subsequently, the first CPU 102 executes diagnoses 1-1 to 1-3 and diagnoses 2-1 to 2-4 during the period between the time t2 and the time t3.

Subsequently, the first CPU 102 starts the second fixed-cycle processing at the time t1 when a notification of completion of the second measurement is received from the sensor 101. The first CPU 102 transmits the second sequence information SI-2 illustrated in FIG. 5 to the second CPU 103 at a time t4 when the first CPU 102 completes the second fixed-cycle processing and does not store the second sequence information SI-2. The first CPU 102 voluntarily transmits the second sequence information SI-2 to the second CPU 103 without receiving a request to acquire sequence information from the second CPU 103. At the time t4, the first diagnosis processing has completed and thus the diagnosis bit corresponding to the first diagnosis processing is set at 1 in the second sequence information SI-2.

Subsequently, the first CPU 102 executes interruption processing, the diagnosis 2-5, the diagnoses 3-1 and 3-2, the diagnoses 4-1 and 4-2, and the diagnosis 1-1. Note that the interruption processing illustrated in FIG. 3 is other interruption processing that is executed aperiodically and communication processing caused by a change in the setting made by the second CPU 103 in operation is taken as an example.

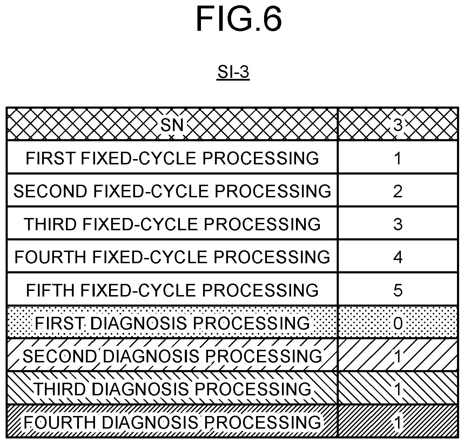

Subsequently, the first CPU 102 starts the third fixed-cycle processing at the time t5 when a notification of completion of the third measurement is received from the sensor 101. The first CPU 102 transmits the third sequence information SI-3 illustrated in FIG. 6 to the second CPU 103 at a time t6 when the first CPU 102 completes the third fixed-cycle processing and does not store the second sequence information SI-3. The first CPU 102 voluntarily transmits the third sequence information SI-3 to the second CPU 103 without receiving a request to acquire sequence information from the second CPU 103. At the time t6, the second diagnosis processing, the third diagnosis processing, and the fourth diagnosis processing have completed and thus the diagnosis bits corresponding to the second diagnosis processing, the third diagnosis processing, and the fourth diagnosis processing, respectively, are set at 1 in the third sequence information SI-3. At the time t6, the first diagnosis processing has been started newly and thus the diagnosis bit corresponding to the first diagnosis processing is set at 0 in the third sequence information SI-3.

At and after the time t6, the fixed-cycle processing, transmission of the sequence information SI, and the self-diagnosis processing are performed repeatedly in the first CPU 102 as described above.

Operations of Second CPU

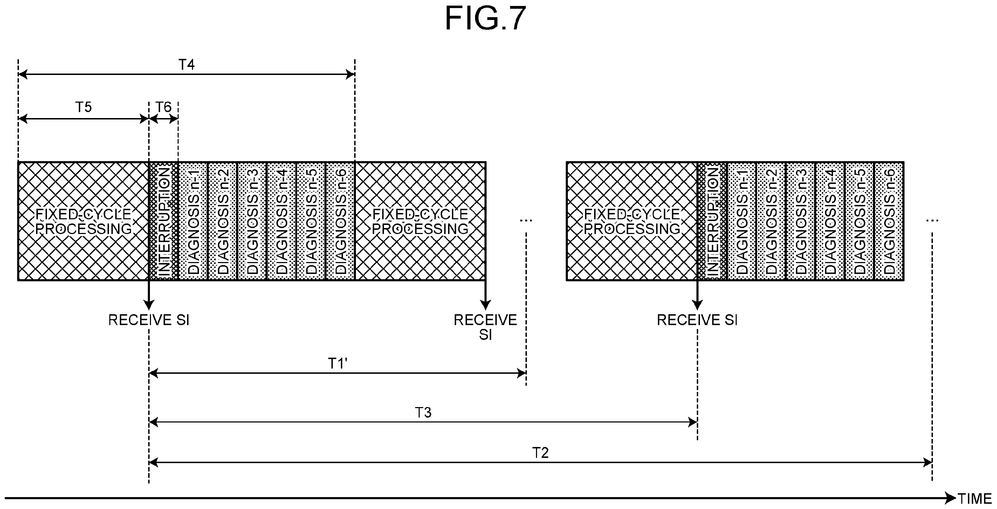

FIG. 7 is a diagram illustrating an example of operations performed by the second CPU according to the first embodiment of the disclosure. According to FIG. 7, after an elapse of the certain time T3, the second CPU 103 checks the diagnosis bits 1 to q in the sequence information SI that is received from the first CPU 102, thereby checking that each of the first to q-th sets of diagnosis processing is started once or more in the first CPU 102 within the certain time T3 and has completed.

The certain time T3 is set previously such that the following conditions C1 and C2 are met. When a time necessary to complete all the first to q-th sets of diagnosis processing in the first CPU 102 is T1, a time necessary for the second CPU 103 to make a notification of an abnormality in the first CPU 102 after the abnormality occurs in the first CPU 102 (that is, a device diagnosis response time) is T2, a cycle of the fixed-cycle processing performed by the first CPU 102 is T4, and the processing time of the fixed-cycle processing that is performed in the first CPU 102 is T5, and a time necessary for other interruption processing performed in the first CPU 102 is T6, and a time necessary or a substantial self-diagnosis excluding the fixed-cycle processing and other interruption processing is T1', the condition C1 and the condition C2 on the certain time T3 are represented as follows.

$$\cdot \text{Condition C1: } T3 < T2$$

$$\cdot \text{Condition C2: } T1' < T3$$

$\cdot$ Provided that $T1' = T1/((T4-T5-T6)/T4)+T4$

$((T4-T5-T6)/T4)$ corresponds to a ratio of the time in which it is possible to perform self-diagnosis during the fixed-cycle processing and $T1/((T4-T5-T6)/T4)$ corresponds to a substantial time necessary for self-diagnosis. The priority of the self-diagnosis processing is lower than the priority of the fixed-cycle processing and other interruption processing and thus the substantial time for self-diagnosis is a time obtained by subtracting the time of the fixed-cycle processing and the time of other interruption processing from the whole time of processing in the first CPU 102. Note that +T4 is a margin corresponding to a shift in timing.

The first embodiment has been described.

Second Embodiment

The second CPU 103 may diagnose that the first CPU 102 has a failure only when an abnormality is detected for multiple times in both or any one of fixed-cycle processing determination and self-diagnosis determination. This makes it possible to prevent a wrong diagnosis that the first CPU 102 has a failure in the case where the sequence information SI is lost due to an electric noise, or the like.

The multiple number of times M is determined previously according to the relation between the time T1' and a time T2. For example, when T1=1 second and T2=5 seconds, the number of times M is preferably set at 2 or more and smaller than 5.

The time T2 is a time necessary for the second CPU 103 to make a notification of an abnormality in the first CPU 102 after occurrence of the abnormality in the first CPU 102 and therefore it is necessary to complete the failure diagnosis on the first CPU within the time T2. Thus, the time necessary to execute the failure diagnosis on the first CPU for N times is preferably less than the time T2.

The time T1 is determined according to the performance of the first CPU 102 and the second CPU 103 and the time T2 is determined according to the product specification of the field device 10. In general, the time T2 is preferably much shorter.

The second embodiment has been described.

Third Embodiment

In the first embodiment, the case where the single CPU transmits the sequence information SI to the second CPU 103 has been described. The field device 10 however may include a plurality of CPUs each of which performs self-diagnosis processing and transmits sequence information SI to the second CPU 103. In order to prevent collision of sequence information SI, the CPUs that transmit the sequence information SI to the second CPU 103 and the second CPU 103 are preferably connected to each other via communication lines that are different from each other.

The third embodiment has been described.

As described above, a field device (the field device 10) of the disclosure includes a sensor (the sensor 101 of the embodiment), a first CPU (the first CPU 102 of the embodiment), and a second CPU (the second CPU 103 of the embodiment). The sensor measures a given physical quantity and outputs a sensor measurement value that is a value representing the measured physical quantity. A first CPU that performs given arithmetic operation and a given fixed-cycle processing on the sensor measurement value and voluntarily transmits sequence information containing a result of executing the fixed-cycle processing. The second CPU determines whether the first CPU has a failure by determining whether the fixed-cycle processing is executed normally based on the sequence information.

As described above, the second CPU performs a failure diagnosis on the first CPU based on the sequence information that is transmitted voluntarily from the first CPU and accordingly the second CPU is able to perform a failure diagnosis on the first CPU based on the sequence information that can be received without an acquisition request to the first CPU, which makes it possible to shorten the processing time necessary for a failure diagnosis on the first CPU.

According to the present disclosure, it is possible to shorten the processing time necessary for a failure diagnosis on a CPU that a field device mounts.

**Claims**

1. A field device (10) comprising:

   a sensor (101) that measures a given physical quantity and that outputs a sensor measurement value that is a value representing the measured physical quantity;
   a first CPU (102) that performs a given arithmetic operation and given fixed-cycle processing on the sensor measurement value and voluntarily transmits sequence information containing a result of executing the fixed-cycle processing;

and
   a second CPU (103) that determines whether the first CPU (102) has a failure by determining whether the fixed-cycle processing is executed normally based on the sequence information.

2. The field device (10) according to claim 1, wherein the second CPU (103) determines whether the fixed-cycle processing is executed normally by checking whether a plurality of sets of processing that are contained in the fixed-cycle processing are executed in order and, when the fixed-cycle processing is not executed normally, diagnoses that the first CPU (102) has a failure.

3. The field device (10) according to claim 2, wherein the second CPU (103) diagnoses that the first CPU (102) has a failure when the fixed-cycle processing is not executed normally for a plurality of times.

4. The field device (10) according to any one of claims 1 to 3, wherein the first CPU (102) performs self-diagnosis processing on the first CPU (102),

   the sequence information contains a result of executing the self-diagnosis, and
   the second CPU (103) determines whether the first CPU (102) has a failure by determining whether the self-diagnosis processing is executed normally based on the sequence information.

5. The field device (10) according to claim 4, wherein the second CPU (103) determines whether the self-diagnosis processing is executed normally by checking that the self-diagnosis processing is started within a certain time once or more and is completed and diagnoses that the first CPU (102) has a failure when the self-diagnosis processing is not executed normally.

6. The field device (10) according to claim 5, wherein the second CPU (103) diagnoses that the first CPU (102) has a failure when the self-diagnosis processing is not executed normally for multiple times.

7. The field device (10) according to claim 5, wherein the certain time is set based on a time necessary to complete the self-diagnosis processing in the first CPU (102), a time necessary until the second CPU (103) makes a notification of an abnormality after the abnormality occurs in the first CPU (102), the cycle of the fixed-cycle processing, and a processing time of the fixed-period processing.

8. The field device (10) according to any one of claims 1 to 7, wherein the sequence information contains an identifier representing an order of transmission of the sequence information, and
the second CPU (103) diagnoses whether the first CPU (102) has a failure by checking the identifier.

9. The field device (10) according to claim 8, wherein the second CPU (103) diagnoses that the first CPU (102) has a failure when a pattern of a change of the identifier does not match a given pattern.

10. The field device (10) according to claim 9, wherein the second CPU (103) determines that the first CPU (102) has a failure when the identifier is not incremented by "1".

11. The field device (10) according to any one of claims 1 to 10, wherein the second CPU (103) sets an analog current value corresponding to a digital value after the given arithmetic operation in the first CPU (102) at a burnout value when it is diagnosed that the first CPU (102) has a failure.

12. A diagnosis method that is used for a field device including a sensor that measures a given physical quantity and that outputs a sensor measurement value that is a value representing the measured physical quantity, a first CPU, and a second CPU, the method comprising:

   by the first CPU, performing a given arithmetic operation and a given fixed-cycle processing on the sensor measurement value and voluntarily transmitting sequence information containing a result of executing the fixed-cycle processing; and
   by the second CPU, determining whether the first CPU has a failure by determining whether the fixed-cycle processing is executed normally based on the sequence information.

# FIG.1

# FIG.2

SI

| SN | 1 TO N |
|---|---|
| FIRST FIXED-CYCLE PROCESSING | 1 TO 5 |
| SECOND FIXED-CYCLE PROCESSING | 1 TO 5 |
| THIRD FIXED-CYCLE PROCESSING | 1 TO 5 |
| FOURTH FIXED-CYCLE PROCESSING | 1 TO 5 |
| FIFTH FIXED-CYCLE PROCESSING | 1 TO 5 |
| FIRST DIAGNOSIS PROCESSING | 0 OR 1 |
| SECOND DIAGNOSIS PROCESSING | 0 OR 1 |
| THIRD DIAGNOSIS PROCESSING | 0 OR 1 |
| FOURTH DIAGNOSIS PROCESSING | 0 OR 1 |

# FIG.3

MEASUREMENT
COMPLETION
NOTIFICATION

MEASUREMENT
COMPLETION
NOTIFICATION

MEASUREMENT
COMPLETION
NOTIFICATION

FIXED-CYCLE PROCESSING — DIAGNOSIS 1-1 — DIAGNOSIS 1-2 — DIAGNOSIS 1-3 — DIAGNOSIS 2-1 — DIAGNOSIS 2-2 — DIAGNOSIS 2-3 — DIAGNOSIS 2-4 — FIXED-CYCLE PROCESSING — INTERRUPTION — DIAGNOSIS 2-5 — DIAGNOSIS 3-1 — DIAGNOSIS 3-2 — DIAGNOSIS 4-1 — DIAGNOSIS 4-2 — DIAGNOSIS 1-1 — FIXED-CYCLE PROCESSING — DIAGNOSIS 1-2 — DIAGNOSIS 1-3 — DIAGNOSIS 2-1 — DIAGNOSIS 2-2 — DIAGNOSIS 2-3 — DIAGNOSIS 2-4 — DIAGNOSIS 2-5

TRANSMIT FIRST
SEQUENCE INFORMATION
(SN=1)

TRANSMIT SECOND
SEQUENCE INFORMATION
(SN=2)

TRANSMIT THIRD
SEQUENCE INFORMATION
(SN=3)

TIME

t1    t2        t3    t4        t5    t6

EP 4 621 505 A1

# FIG.4

SI-1

| SN | 1 |
|---|---|
| FIRST FIXED-CYCLE PROCESSING | 1 |
| SECOND FIXED-CYCLE PROCESSING | 2 |
| THIRD FIXED-CYCLE PROCESSING | 3 |
| FOURTH FIXED-CYCLE PROCESSING | 4 |
| FIFTH FIXED-CYCLE PROCESSING | 5 |
| FIRST DIAGNOSIS PROCESSING | 0 |
| SECOND DIAGNOSIS PROCESSING | 0 |
| THIRD DIAGNOSIS PROCESSING | 0 |
| FOURTH DIAGNOSIS PROCESSING | 0 |

# FIG.5

SI-2

| SN | 2 |
|---|---|
| FIRST FIXED-CYCLE PROCESSING | 1 |
| SECOND FIXED-CYCLE PROCESSING | 2 |
| THIRD FIXED-CYCLE PROCESSING | 3 |
| FOURTH FIXED-CYCLE PROCESSING | 4 |
| FIFTH FIXED-CYCLE PROCESSING | 5 |
| FIRST DIAGNOSIS PROCESSING | 1 |
| SECOND DIAGNOSIS PROCESSING | 0 |
| THIRD DIAGNOSIS PROCESSING | 0 |
| FOURTH DIAGNOSIS PROCESSING | 0 |

# FIG.6

SI-3

| SN | 3 |
|---|---|
| FIRST FIXED-CYCLE PROCESSING | 1 |
| SECOND FIXED-CYCLE PROCESSING | 2 |
| THIRD FIXED-CYCLE PROCESSING | 3 |
| FOURTH FIXED-CYCLE PROCESSING | 4 |
| FIFTH FIXED-CYCLE PROCESSING | 5 |
| FIRST DIAGNOSIS PROCESSING | 0 |
| SECOND DIAGNOSIS PROCESSING | 1 |
| THIRD DIAGNOSIS PROCESSING | 1 |
| FOURTH DIAGNOSIS PROCESSING | 1 |

# FIG.7

EP 4 621 505 A1

Europäisches Patentamt

European Patent Office

Office européen des brevets

# EUROPEAN SEARCH REPORT

**Application Number**

EP 25 16 3455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/157291 A1 (UCHIZAWA RIHO [JP]) 27 May 2021 (2021-05-27) | 1,2,4,5, 7-12 | INV. G05B19/042 |
| A | * paragraphs [0006], [0007], [0022] - [0025]; figure 1 * | 3,6 | G05B9/03 |
| X | US 2007/273508 A1 (LALLA ROBERT [DE] ET AL) 29 November 2007 (2007-11-29) | 1,2,4,5, 7-12 | |
| A | * figures 1,2 * | 3,6 | |
| X | US 2023/367299 A1 (KARWECK LARS [DE] ET AL) 16 November 2023 (2023-11-16) | 1,2,4,5, 7-12 | |
| A | * paragraphs [0001], [0015], [0016] * | 3,6 | |

**TECHNICAL FIELDS SEARCHED (IPC)**

G05B

The present search report has been drawn up for all claims

| Place of search | Date of completion of the search | Examiner |
|---|---|---|
| Munich | 11 July 2025 | Barriuso Poy, Alex |

EPO FORM 1503 03.82 (P04C01)

## ANNEX TO THE EUROPEAN SEARCH REPORT
## ON EUROPEAN PATENT APPLICATION NO.

EP 25 16 3455

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | | Publication date |
|---|---|---|---|---|
| US 2021157291 A1 | 27-05-2021 | JP | 2021086359 A | 03-06-2021 |
| | | US | 2021157291 A1 | 27-05-2021 |
| US 2007273508 A1 | 29-11-2007 | AT | E392653 T1 | 15-05-2008 |
| | | CN | 1898616 A | 17-01-2007 |
| | | DE | 10361465 A1 | 11-08-2005 |
| | | EP | 1697803 A2 | 06-09-2006 |
| | | JP | 4334572 B2 | 30-09-2009 |
| | | JP | 2007518974 A | 12-07-2007 |
| | | US | 2007273508 A1 | 29-11-2007 |
| | | WO | 2005064424 A2 | 14-07-2005 |
| US 2023367299 A1 | 16-11-2023 | CN | 116171413 A | 26-05-2023 |
| | | DE | 102020119297 A1 | 27-01-2022 |
| | | EP | 4185931 A1 | 31-05-2023 |
| | | US | 2023367299 A1 | 16-11-2023 |
| | | WO | 2022017700 A1 | 27-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08234828 A